# EUROPEAN PATENT SPECIFICATION

(11) **EP 1 863 144 B1**
(45) Date of publication and mention of the grant of the patent: **06.01.2016**
(21) Application number: 07075413.0
(22) Date of filing: 30.05.2007
(51) Int. Cl.: H02G 3/08

(54) **Installation box including connection means for a spout**
Installationskasten mit Verbindungsmitteln für einen Ausguss
Boîte d'installation dotée d'un moyen de connexion pour verseur

(30) Priority: 30.05.2006 NL 1031907
(43) Date of publication of application: 05.12.2007
(60) Divisional application: 15194286.9
(73) Proprietor: ABB B.V., 6716 AA Ede (NL)
(72) Inventor: Renckens, Thomas Philippus, 3742 ND Baarn (NL)
(74) Representative: Geurts, Franciscus Antonius

(56) References cited:
- EP-A- 1 587 196
- DE-A1- 3 518 109
- NL-A- 6 902 781

## Description

### BACKGROUND OF THE INVENTION

The invention relates to an installation box to be placed in a hole in a wall of a building.

Such boxes form a part of the electric wiring of the building, wherein switch material is attached onto the box and junctions are included between the cables in the box. The cables are accommodated in rigid or flexible cable protection pipes that connect to a spout on the installation box. During installation a blind hole is drilled in the wall, after which the box is put into the hole subsequently to be secured for instance by plaster. The boxes may be coupled to each other in series for the installation of for instance a series of switches at the wall.

A known installation box is provided with a box wall having several holders for insert spouts. The insert spouts comprise a spout member that is connected to a rectangular coupling wall, which during installation can be placed in one of the holders according to need. The position of the spout member with respect to the box wall is thus fixed, which may be disadvantageous when for instance a slot for the cable protection pipe is not slotted deep enough into the wall. The known insert spouts may therefore also be placed inverted into the holders in order to obtain another connection depth, however, when inverting such a spout it first needs to be taken completely out of the holder. Furthermore the transition from the spout member to the rectangular coupling wall may be acute to such an extent that the cables need to be pulled hard when passing the cables through the insert spout. The insulation sheath of the cables may get damaged as a result.

EP-A-1.587.196 discloses a junction box according to the preamble of claim 1. The junction box herein disclosed has a cylindrical wall with ports, each bounded by two opposite edge parts wherein straight edges of a spout part can be slid in. The spout part can be slid in only in one sliding direction, which is directed upwards from the side of the bottom of the box. In its end position the spout part is retained by a stop. Within said cooperation of the edge parts and the straight edges the spout can be retained in one position only with respect to the wall.

NL-A-6902781 discloses a junction box having a wall with a gate that is bounded by guides where rims of a spout can be slid in, also in one sliding direction only, which is directed upwards towards the mounting brackets of the box. In its end position the spout is retained by bevelled edges that seems to engage the edges of the gate. Within said cooperation of the guides and the rims, the spout can retained in one position only with respect to the wall.

DE-A-3518109 discloses junction boxes each comprising wall segments that are provided with a closed passage opening. At the upper side only, the wall segments are provided with ribs that can be slit into slots of the second box, wherein the upper ends of the ribs are provided with projecting abutments that are confined within apertures in the second box to align the upper edges of the boxes.

It is an object of the invention to provide an installation box of which the position of the spout with respect to the box wall can easily be adjusted.

It is an object of the invention to provide an installation box wherein the cables can be pulled through the spout in a controlled manner.

### SUMMARY OF THE INVENTION

The invention, from one aspect, provides an installation box according to claim 1.

The first and second connection means make it possible to retain the insert piece in at least two defined positions with respect to the wall, wherein the cooperation will not necessarily have to be ended. The position of the insert piece with respect to the wall can therefore easily be changed between the defined positions, wherein the orientation of the spout with respect to the wall can remain the same. The position of the spout with respect to the wall can be manually changed by touch.

The adjustment range can be further increased when the first and second connection means are adapted for within the cooperation retaining the insert piece in at least three defined positions with respect to the wall.

After having been placed in one of the defined positions, the insert piece can be retained in said position when the first and second connection means are adapted for securing the insert piece against displacement in the insert direction and in the direction opposite thereto.

The orientation of the spout with respect to the wall may in the defined positions remain the same when the first and the second connection means are adapted for retaining the insert piece in the defined positions in the same spatial orientation with respect to the wall.

Preferably the threshold force is provided by a snap connection, so that reaching a next defined position, and thus a reliable position, can be heard.

In a first development the first connection means comprise first guiding means and first locking means, and the second connection means comprise second guiding means and second locking means for cooperation with the first guiding means and first locking means, respectively.

In one embodiment which, as regards manufacturing technique, is easy to manufacture, the first and second locking means are situated adjacent to the first and second guiding means, respectively.

Preferably the first and second guiding means comprise a first and second rail, respectively, extending in insert direction, wherein the first and second rail are adjusted for interengagement. Due to the rails interengaging, a closed connection can be formed over the length of said rails, as a result of which it can be counteracted that for instance plaster enters during securing the installation box.

The first and/or second rail can be brought into interengagement in an orderly manner when the first and/or second rail at an insert side keep an insert opening free that is oriented transverse to the insert direction, for transverse to the insert direction bringing the first and second rail in a mutual positioning position. In the mutual positioning position, the first and second rail may for instance be parallel to each other and partially in line with each other.

Preferably the insert opening in the insert direction is spaced apart from a leading part of the first and/or second locking means. In this way it can be effected that the first and or second locking means will not become active until in or at a short distance from the defined positions. The leading part of the first and/or second locking means therefore need not be overcome when inserting into the insert opening.

The connection between the insert piece and the wall can be secured in a form-closed manner when the first and second locking means are adapted for a mutual engagement in a direction transverse to the insert direction.

In one embodiment thereof the first and second locking means are adapted for mutual engagement with substantially opposite locking surfaces of the first and second locking means, which locking surfaces are at least partially spaced apart in the insert direction.

Preferably the first and second locking means are adapted for a mutual concave-convex engagement.

Alternatively or additionally the first and second locking means are adapted for a mutual mortise-and-tenon engagement, and/or a mutual male-female engagement. This for instance also includes a cam-hole engagement, wherein with respect to the insert direction the cam has an upwardly inclined and a downwardly inclined engagement surface.

Preferably the installation box comprises elastically deformable areas at the first and/or second locking means for elastic deformation during entering the cooperation of the first and second locking means and the subsequent preservation of the cooperation.

The defined positions can be distributed in the insert direction over a wide range when the first locking means in insert direction are designed so as to be multiple, wherein the first locking means in insert direction are situated on both sides of the passage opening.

Likewise the second locking means in insert direction can be designed so as to be multiple, wherein the second locking means in insert direction are situated on both sides of the spout.

Preferably the second locking means in insert direction are designed so as to be multiple, wherein a part of the second locking means is situated at a break-off member of the insert piece, which member preferably is situated transverse to the insert direction, wherein the part of the second locking means is removable by breaking off the break-off member. A part of the second locking means that does not have a retaining function in a defined position, can then be removed according to need together with the removable break-off member.

The installation box preferably comprises a bottom wall and a circumferential wall of which an edge bounds an installation opening, wherein the insert direction is oriented transverse to the plane of the installation opening.

The break-off member can easily be broken off after insertion of the insert piece, by from the bottom wall of the installation box pushing against the break-off member when the break-off member is positioned with respect to the spout for in connected condition of the connection means being situated near the bottom wall of the installation box and/or to protrude therefrom.

In a more universal embodiment the first connection means are also adapted for entering a connection with the first connection means of a comparable installation box. A preferred embodiment thereof is described in claim 15.

Preferably, the insert piece comprises between the second connection means a cover wall oriented substantially transverse to the spout, of which cover wall an inside in connected condition of the spout is at least partially recessed from a boundary of the passage opening for defining a front space between the spout and the box wall.

The front space may ensure an even transition between spout and the inside of the installation box, as a result of which the cables can be inserted into the installation box in a controlled manner.

Damage to the insulation sheath of the cables can be particularly counteracted when at the inside the spout changes according to a curved surface, preferably a convexly curved surface, into the plate section.

Towards the wall the spout preferably has a cross-section that broadens itself.

The spout can be placed in several positions with respect to the wall when the second connection means and the cover wall define a substantially rectangular covering for the passage opening, wherein the centre line of the spout is situated out of the centre of the covering.

The invention furthermore provides an assembly of a first and a second installation box as mentioned before, according to claim 18.

The position of the first and/or second locking means on either side of the passage opening can enable a connection between the first and second box that can also remain reliable when bending moments are inadvertently exerted on the connected boxes.

The first and second box can after effecting be retained in this connected condition when the first and second connection means are adapted for securing the first and second installation box against mutual movement in the insert direction and in a direction opposite thereto.

Preferably the first and second installation box both comprise a circumferential wall of which an edge bounds an installation opening, wherein the insert direction is oriented transverse to the plane of the installation openings.

The first and second locking means preferably are adjusted to locking the boxes in a mutual position in which the installation openings are situated substantially in the same plane. Switch material to be built up can thus be attached to the installation boxes using a linear measure of screws only.

The connection can be locked by a form-closed confinement when the first locking means comprise a slot bounded in its longitudinal direction and extending in insert direction, and the second locking means comprise two protrusions that can be placed when inserting into the slot, wherein the centre-to-centre distance between the protrusions is smaller than the distance between the boundaries of the slot.

Preferably the first and second connection means comprise a first and second rail, respectively, extending in insert direction, wherein the first and second rail are adjusted for interengagement. Due to the rails interengaging a closed connection can be formed over the length of said rails, as result of which it can be counteracted that for instance plaster enters when securing the installation boxes.

The first and/or second rail can be brought into interengagement in an orderly manner when the first and/or second rail at an insert side keep an insert opening free that is oriented transverse to the insert direction, for transverse to the insert direction bringing the first and second rail in a mutual positioning position. In the mutual positioning position, the first and second rail may for instance be parallel to each other and partially in line with each other.

The insert opening in the insert direction preferably is spaced apart from a leading part of the first and/or second locking means. In this way it can be effected that the first and or second locking means will not become active until in or at a short distance from the coupled end position. The leading part of the first and/or second locking means therefore need not be overcome when inserting into the insert opening.

In one embodiment which, as regards manufacturing technique, is easy to manufacture, the first and/or second locking means are situated adjacent to the first and second rail, respectively.

In a more universal embodiment the first and/or second connection means are also adapted for connecting an insert piece having a spout to the first and second installation box, respectively.

From a further aspect, the invention furthermore provides an installation box comprising a wall having a passage opening that may or may not be closed, and an insert piece having a spout to be placed in front of the insert opening in an insert direction, wherein the wall comprises first connection means having first locking means, and the insert piece comprises second connection means having second locking means cooperating with the first, for connecting the insert piece to the wall and thus locking the connection means, wherein the first and second locking means are adapted for within the cooperation of the first and second connection means in insert direction stepwise locking the insert piece with respect to the wall.

The invention furthermore provides, from a further aspect, an installation box comprising a wall having a passage opening that may or may not be closed, and an insert piece having a spout to be placed in front of the insert opening in an insert direction, wherein the wall comprises first connection means having first locking means and the insert piece comprises second connection means having second locking means cooperating with the first, for connecting the insert piece to the wall and thus locking the connection means, wherein the first and second locking means are adapted for within the cooperation of the first and second connection means in the insert direction locking the insert piece with respect to the wall in several locking positions.

The aspects and measures described in this description and claims of the application and/or shown in the drawings of this application may where possible also be used individually. This particularly applies to the measures and aspects that have been described per se in the sub claims.

### SHORT DESCRIPTION OF THE DRAWINGS

The invention will be elucidated on the basis of a number of exemplary embodiments shown in the attached drawings, in which:
Figure 1 shows a view in perspective of an installation box with slide-on spout according to the invention, to which a second installation box has also been coupled;
Figure 2 shows a view in perspective of the installation boxes according to figure 1, without the slide-on spout;
Figure 3 shows a view in perspective of the coupling side of the slide-on spout according to figure 1;
Figure 4 shows a view in perspective of a vertical cross-section of the installation box and the slide-on spout according to the lines IV-IV in figure 1;
Figures 5A-5C show vertical cross-sections of the installation box and the slide-on spout according to the line V-V in figure 1, in three possible locking positions of the slide-on spout;
Figure 6 shows an alternative slide coupling for the installation box according to the invention; and
Figure 7 shows an alternative slide coupling for the slide-on spout according to the invention.

### DETAILED DESCRIPTION OF THE DRAWINGS

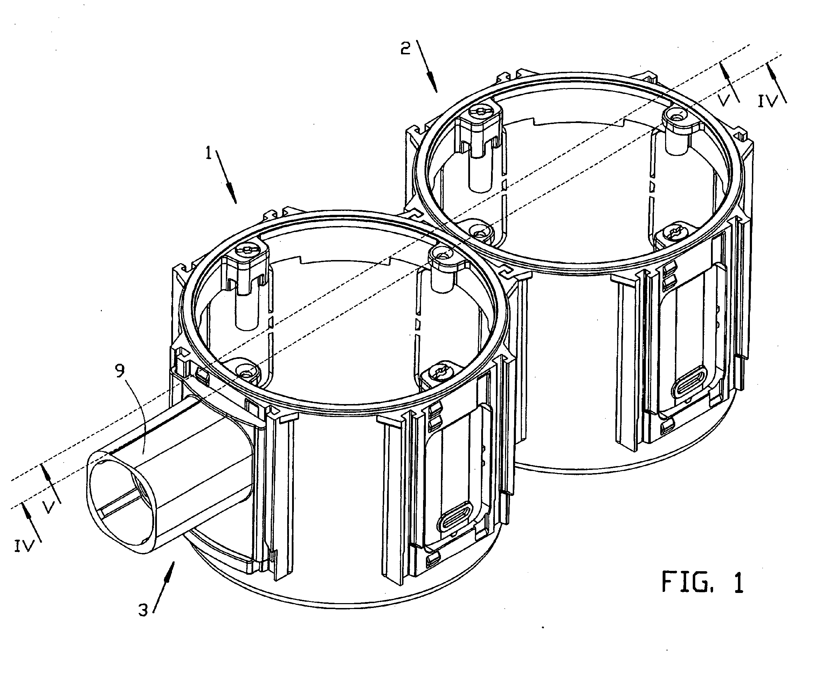

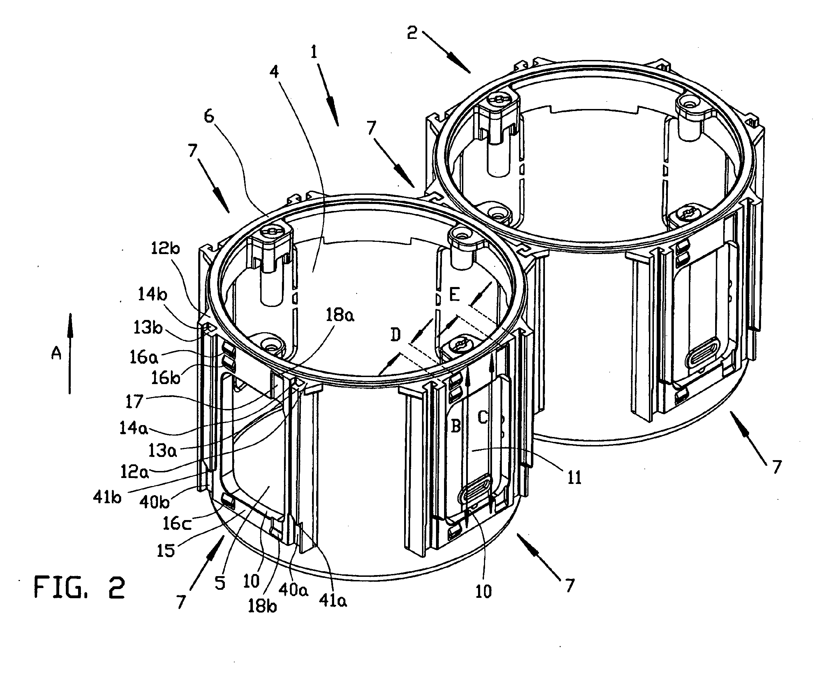

The installation box 1 according to figures 1 and 2 comprises a bottom wall 5 and a circumferential wall 4 having an installation edge 6 provided with screws and threaded bushes for building up switch material. The installation box 1 is manufactured of injection mouldable synthetic material. The circumferential wall 4 comprises four passage openings 10 distributed all round for lines, and a few break-out gates 11 for keeping the passage openings 10 closed. At the outside of the circumferential wall 4, at the location of the passage openings 10, the installation box 1 comprises four slide couplings 7 for coupling the installation box 1 to an in this example identical installation box 2, or for coupling a separate slide-on spout 3 to the installation box 1.

As shown in figure 2 each slide coupling 7 comprises an abutment surface 15 surrounding the opening 10 and along the longitudinal sides 12a, 12b that are transverse to the plane of the installation ring 6, two parallel hook-shaped rails 13a, 13b that bound identically shaped hook slots 14a, 14b. At their bottom side the hook rails 13a, 13b are shorter than the hook slots 14a, 14b for providing in insert direction A elongated insert openings 40a, 40b. The hook rails 13a, 13b comprise an inclined pilot edge 41 a, 41 b for facilitating the access below the hook rails 13a, 13b.

At a short distance from the hook rail 13b, at one side of slide coupling 7 a series of locking cams 16a, 1 6b, 16c are situated parallel thereto and extending from the abutment surface 15. In insert direction A the first and second locking cam 16a, 1 6b are situated above the passage opening 10, and the third locking cam 16c is situated below the passage opening 10. In insert direction A each locking cam 16a, 16b, 1 6c comprises an ascending locking surface which via an edge or curve changes into an opposite descending locking surface. In this example the ascending locking surface and the descending locking surface are at substantially the same inclined angle to the insert direction A. The inclined angle is approximately 45°.

Opposite the locking cams 16a, 16b, 16c and parallel thereto, the slide coupling 7 comprises a slot 17 that is recessed with respect to the abutment surface 15, and which at the upper and lower side is bounded by end thresholds 18a, 18b. The ultimate distance B in insert direction A between the outermost cams 1 6a, 16c substantially equals the ultimate length C of the bounded slot 17 between the end thresholds 18a, 18b. The centre-to-centre distance, measured between the transition edges of said cams 16a, 16c is smaller than the ultimate length C of the bounded slot 17. The distance D between the centre of the locking cams 16a, 16b, 16c and the hook rail 13b substantially equals the distance E between the centre of the slot 1 7 and the side of the hook slot 14a.

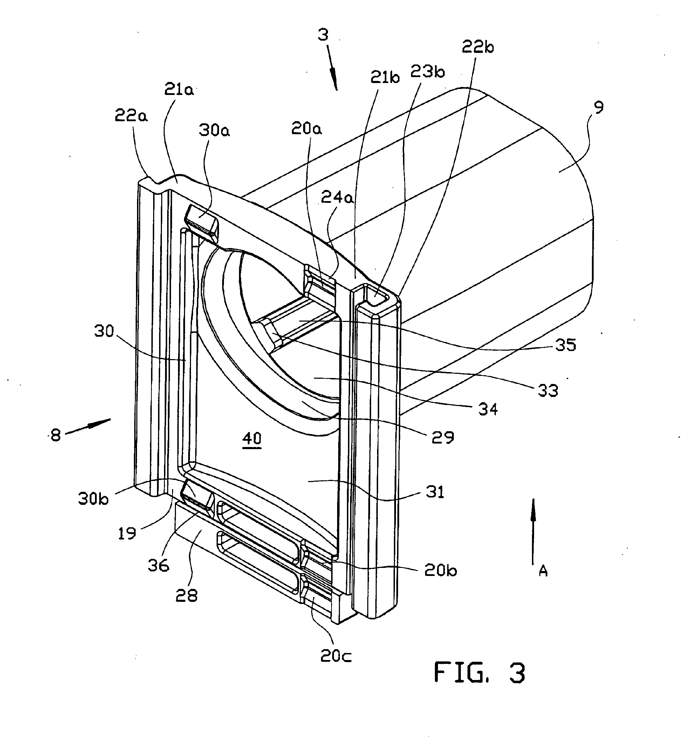

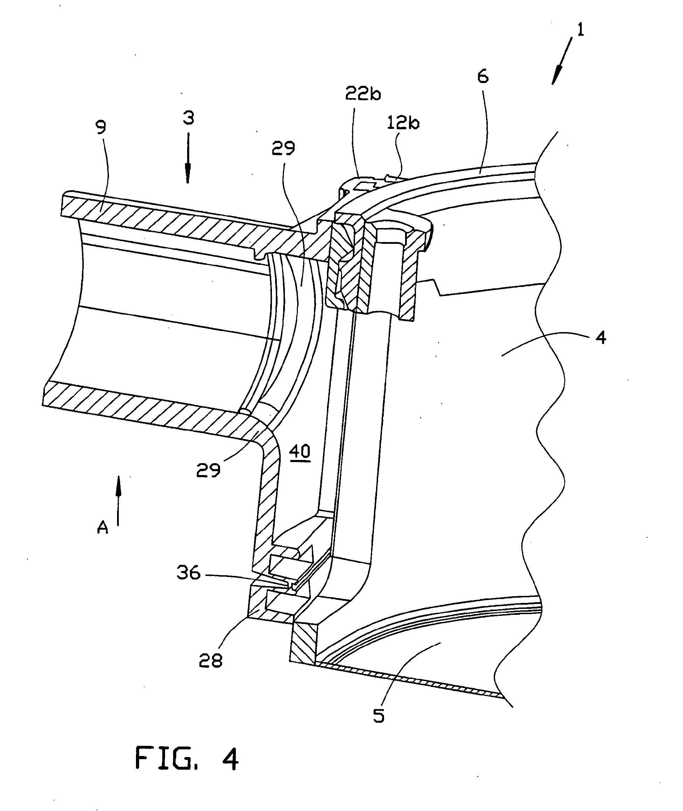

The slide-on spout 3 as shown in figures 3 and 4 comprises a slide coupling 8 and a spout member 9 having connecting ribs 35 and end stops 33 at the inner wall 34 for securing a rigid line in the spout member 9. The spout member 9 is positioned eccentric with respect to a cover wall member 31 having a substantially rectangular contour for being able to fully cover one of the passage openings 10. The cover wall member 31 has a curvature comparable to the curvature of the circumferential wall 4. With a convex curve 29, the inner wall 34 of the spout member 9 changes into the surface of the cover wall member 31. Around the cover wall member 31 the slide-on spout 3 has an abutment surface 19, wherein the cover wall member 31 with a circumferential rebate 30 is situated recessed with respect to said abutment surface 1 9 to define an intermediate space 40 between the cover wall member 31 and the transition to the abutment surface 19.

At the longitudinal sides 21 a, 21 b, the slide coupling 8 of the slide-on spout 3 comprises hook rails 22a, 22b, wherein at one side the hook rail 22b bounds a similarly shaped hook slot 23b. On the abutment surface 19, at a short distance from one hook rail 22a, a first and second locking cam 30a, 30b are situated at the lower side and the upper side of the spout transition 29. In insert direction A each locking cam 30a, 30b comprises an ascending locking surface which via an edge or curve changes into an opposite descending locking surface. In this example the ascending locking surface and the descending locking surface are at substantially the same inclined angle to the insert direction A. The inclined angle is approximately 45°.

At the opposite longitudinal side 21 b the slide coupling 8 comprises a series of locking holes 20a, 20b, 20c situated parallel thereto, of which locking holes the first locking hole 20a is situated above the spout member 9 and the second and third are situated below the spout member 9. The third locking hole 20c is situated in an break-off member 28 at the bottom side of the slide-on spout 3. The break-off member 28 is connected by means of a break strip or living hinge 29 in order to be optionally broken off from the rest of the slide-on spout 3, or to be swung away from it.

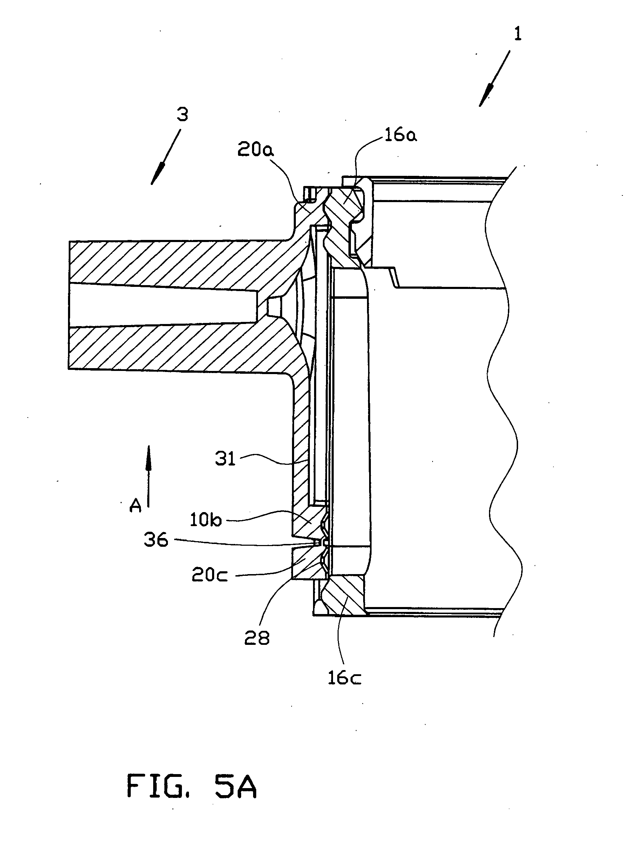

Figures 4 and 5A-5C show the slide-on spout 3 which with the slide coupling 8 has been coupled to the slide coupling 7 of the installation box 1. To that end the hook rails 22a, 22b of the slide coupling 8 have been fittingly inserted from the bottom side in slide direction A into the hook slots 14a, 14b behind the hook rails 13a, 13b of the slide coupling 7. The third locking cam 16c has then remained out of engagement from the leading first locking hole 20a because the hook rails 22a, 22b have been inserted transverse to the slide direction A via the insert openings 40a, 40b into the hook slots 14a, 14b.

Figure 5A shows a cross-section of the installation box 1 and the slide-on spout 3 slid thereon according to the lines V-V in figure 1, locked in an upper position. Only the first locking cam 16a of the installation box 1 is in engagement with the first locking hole 20a of the slide-on spout 3. The first locking cam 30a (not shown in the figure) of the slide-on spout 3 with its in insert direction A ultimate part, in this example the descending locking surface, abuts the upper threshold 18a of the installation box 1. The cover wall member 31 and the break-off member 28 together close off the passage opening 10.

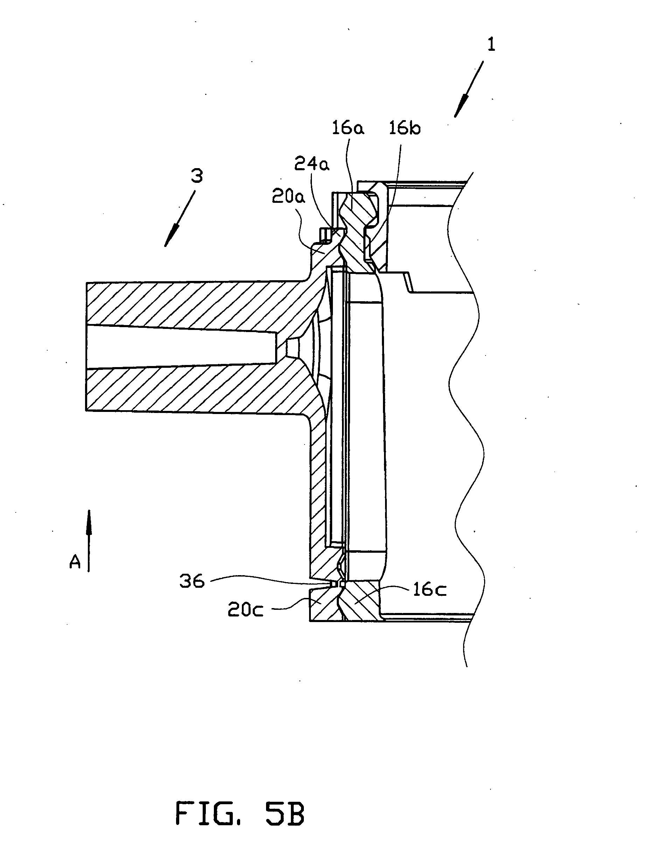

In figure 5B the slide-on spout 3 is locked in an intermediate position, wherein the second locking cam 16b of the installation box 1 is in engagement with the first locking hole 20a of the slide-on spout 3 in order to retain the slide-on spout 3 in the position shown. The upper edge 24a situated above the first locking hole 20a of the slide-on spout 3, is confined between the facing locking surfaces of the first and second locking cam 16a, 16b of the installation box 1. The third locking cam 1 6c of the installation box 1 is in engagement with the third locking hole 20c of the slide-on spout 3 under slight pressure only of the break strip 36.

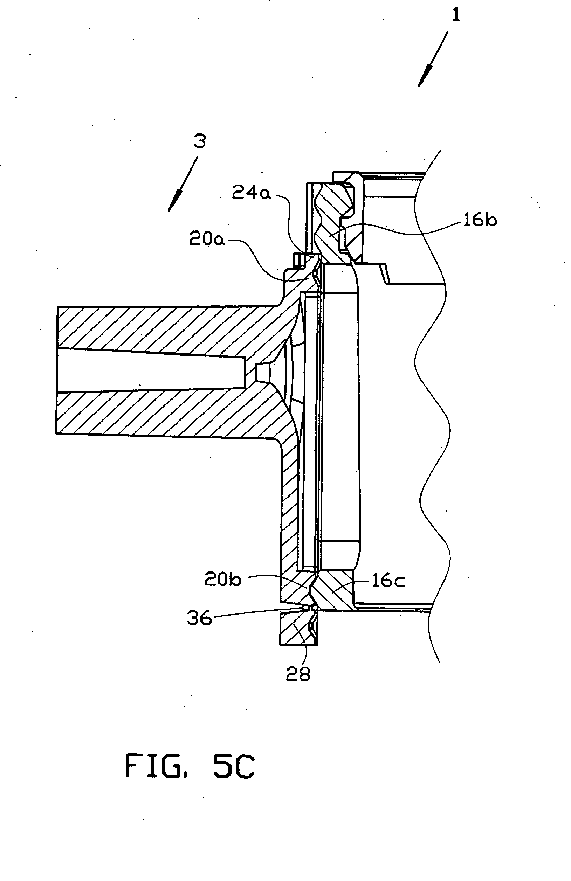

In figure 5C the slide-on spout 3 is locked in the lowermost position, wherein the third locking cam 16c of the installation box is in engagement with the second locking hole 20b of the slide-on spout 3. The second locking cam 30b (not shown in this figure) of the slide-on spout 3, with its in insert direction A ultimate part, in this example the ascending locking surface, abuts the lowermost threshold 1 8b and the upper edge 24a abuts the second locking cam 16b of the installation box 1, as a result of which also a pair of facing, abutting locking surfaces has been effected. The cover wall member 31 covers the passage opening 10, and the break-off member 28 protrudes beyond the plane of the bottom 5. The break-off member 28 has no function here, so that it can be broken off.

When entering the slide coupling between the boxes 1, 2 as shown in figure 1, the in insert direction A ultimate parts of the first and third locking cam 16a, 16c are confined between the end thresholds 18a, 18b of the slot 17. When sliding the slide couplings 7 into each other, the rails 13a, 13b have been inserted via the insert openings 40a, 40b into the hook slots 14a, 14b, wherein the first and second locking cam 16a, 16b have been placed in the slot 17 transverse to the insert direction A past the lowermost end threshold 18b. When sliding further until in the end position according to figure 1, the locking cams 16a-c of both installation boxes 1, 2 have entered within the end thresholds 18a, 18b by snapping, wherein the outermost locking surfaces that face away from each other of the locking cams 1 6a, 1 6c abut the end thresholds 18a, 18b.

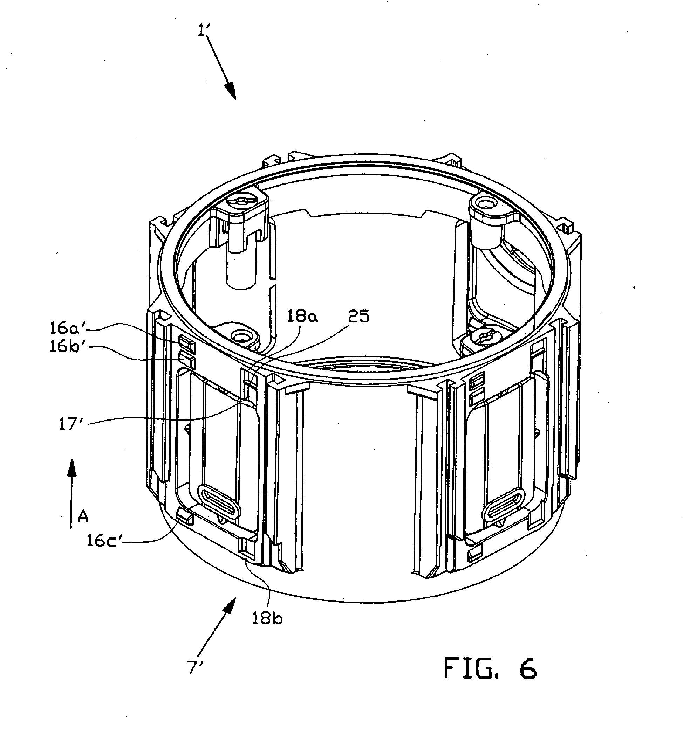

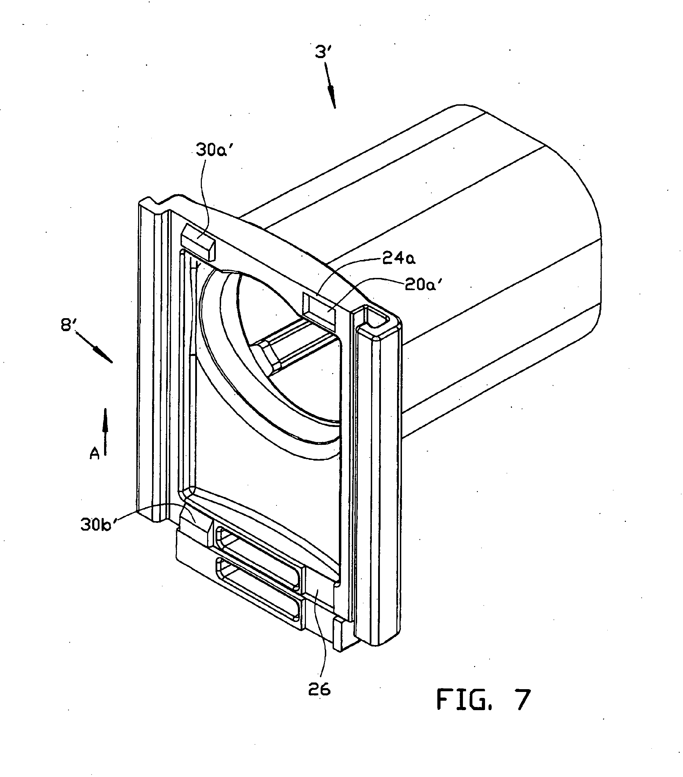

Figures 6 and 7 show a second embodiment of the installation box 1' and the slide-on spout 3' according to the invention, having slightly alternative slide couplings 7', 8'. Only the parts which, as regards shape, are slightly different from the first embodiment, have been provided with a reference number corresponding to the first embodiment but with an accent.

The slide coupling 7' of the installation box 1' is provided with a first, second and third locking cam 16a', 16b', 16c'. The first locking cam 16a' in insert direction A comprises an upwardly inclined locking surface which via a transitional surface extending in insert direction A changes in a with respect to the ascending locking surface more steeply downwardly inclined locking surface. The second locking cam 1 6b' in insert direction A comprises a steeply ascending locking surface which via a transitional surface extending in insert direction A, changes into an opposite equally steeply descending locking surface. The third locking cam 16c' in insert direction A comprises a steeply ascending locking surface which via a transitional surface extending in insert direction A, changes into a, with respect to the ascending locking surface, less steeply downwardly inclined locking surface. In this example the steep locking surfaces are at an angle of 45-80° to the insert direction A. At the upper side the slot 17' has been provided with a partition 25 by which means an end chamber the size of a locking cam has been formed in the slot 17'.

The slide coupling 8' of the slide-on spout 3' comprises a first and a second locking cam 30a, 30b. The first locking cam 30a' in insert direction A comprises a steeply ascending locking surface which via a transitional surface extending in insert direction A, changes into an opposite equally steeply descending locking surface. The second locking cam 30b' in insert direction A comprises a steeply ascending locking surface which via a transitional surface extending insert direction A, changes into an opposite and less steeply descending locking surface. The steep locking surfaces are at an angle of 45-80° to the insert direction A. At the opposite side the slide coupling 8' comprises a first locking hole 20a' having internal dimensions to be able to accommodate the first or second locking cam 16a', 16b'. In the insert direction A in line with the first locking hole 20a' the slide coupling 8' comprises a through-slot 26.

In the upper locking position of the slide-on spout 3' in accordance with figure 5A, the first locking cam 16a' of the installation box 1' is confined in the first locking hole 20a' of the slide-on spout 3', and the first locking cam 30a' of the slide on spout 3' is confined between the uppermost threshold 18a and the partition 25 of the installation box 1'.

In the middle locking position in accordance with figure 5B, the second locking cam 16b' of the installation box 1' is confined in the first locking hole 20a' of the slide-on spout 3', and the first locking cam 30a' of the slide-on spout 3' abuts the partition 25 of the installation box 1'.

In the lowermost locking position in accordance with figure 5C the second locking cam 30b' of the slide-on spout 3' with the steeply ascending locking surface abuts the lowermost threshold 18b of the installation box 1'. The upper edge 24a of the slide-on spout 3' with the steeply ascending locking surface then abuts the second locking cam 1 6b of the installation box 1, as a result of which also a pair of facing, abutting locking surfaces has been effected.

## Claims

1. Installation box (1, 1') comprising a wall (4) having a passage opening (10) that may or may not be closed, and an insert piece (3, 3') having a spout (9) to be placed in front of the passage opening, wherein the wall (4) comprises first connection means (13a,b, 16a-c) and the insert piece (3, 3') comprises second connection means (22a,b, 20a-c) cooperating with the first, for connecting the insert piece to the wall by moving the insert piece in an insert direction (A) with respect to the wall (4), **characterized in that** the first and second connection means (13a,b, 16a-c ,22a,b, 20a-c) are adapted for, within the cooperation of the first and second connection means, retaining the insert piece (3, 3') in the insert direction (A) in at least two defined positions with respect to the wall (4), wherein the defined positions are consecutive and offset from each other in the insert direction (A), and wherein the insert piece (3, 3') is movable from one defined position to a next defined position, within the cooperation of the first and second connection means, by overcoming a threshold force.

2. Installation box (1, 1') according to claim 1, wherein the first and second connection means (13a,b, 16a-c, 22a,b, 20a-c) are adapted for within the cooperation retaining the insert piece (3, 3') in at least three defined positions with respect to the wall (4).

3. Installation box (1, 1') according to claim 1 or 2, wherein the first and second connection means (13a,b, 16a-c, 22a,b, 20a-c) are adapted for securing the insert piece (3, 3') against displacement in the insert direction and in the direction opposite thereto.

4. Installation box (1, 1') according to any one of the preceding claims, wherein the first and the second connection means (13a,b, 16a-c, 22a,b, 20a-c) are adapted for retaining the insert piece in the defined positions in the same spatial orientation with respect to the wall (4).

5. Installation box (1, 1') according to any one of the preceding claims, wherein the threshold force is provided by a snap connection (16a-c, 20a-c).

6. Installation box (1, 1') according to any one of the preceding claims, wherein the first connection means (13a,b, 16a-c) comprise first guiding means (13a,b) and first locking means (16a-c), and the second connection means (22a,b 20a-c) comprise second guiding means (22a,b) and second locking means (20a-c) for cooperation with the first guiding means and first locking means respectively, wherein the first and second locking means 16a-c, 20a-c) preferably are situated adjacent to the first and second guiding means (13a,b, 22a,b), respectively.

7. Installation box (1, 1') according to claim 6, wherein the first and second guiding means (13a,b, 22a,b) comprise a first and second rail (13a,b 22a,b), respectively, extending in insert direction (A), wherein the first and second rail (13a,b, 22a,b) are adjusted for interengagement, wherein the first and/or second rail preferably at an insert side keep an insert opening (40a,b) free that is oriented transverse to the insert direction (A), for transverse to the insert direction (A) bringing the first and second rail in a mutual positioning position, wherein the insert opening (40a,b) in the insert direction (A) preferably is spaced apart from a leading part of the first and/or second locking means (16a-c, 20a-c).

8. Installation box (1, 1') according to claim 6 or 7, wherein the first and second locking means (16a-c, 20a-c) are adapted for mutual engagement in a direction transverse to the insert direction (A), wherein the first and second locking means (16a-c, 20a-c) preferably are adapted for mutual engagement with substantially opposite locking surfaces of the first and second locking means (16a-c, 20a-c), which locking surfaces are at least partially spaced apart in insert direction (A).

9. Installation box (1, 1') according to any one of the claims 6-8, wherein the first and second locking means (16a-c, 20a-c) are adapted for a mutual concave-convex engagement, and/or wherein the first and second locking means are adapted for a mutual mortise-and-tenon engagement, and/or wherein the first and second locking means are adapted for a mutual male-female engagement.

10. Installation box (1, 1') according to any one of the claims 6-9, comprising elastically deformable areas at the first and/or second locking means (16a-c, 20a-c) for elastic deformation during entering the cooperation of the first and second locking means (16a-c, 20a-c) and the subsequent preservation of the cooperation.

11. Installation box (1, 1') according to any one of the claims 6-10, wherein the first locking means (16a-c) in insert direction are designed so as to be multiple, wherein the first locking means (16a-c) in insert direction (A) are situated on both sides of the passage opening, and/or wherein the second locking means in insert direction (A) are situated on both sides of the spout (9), and/or wherein a part of the second locking means (20) is situated at a break-off member (28) of the insert piece, which member preferably is situated transverse to the insert direction, wherein the part of the second locking means (20c) is removable by breaking off the break-off member (28).

12. Installation box (1, 1') according to any one of the preceding claims, comprising a bottom wall (5) and a circumferential wall (4) of which an edge (6) bounds the installation opening, wherein the insert direction (A) is oriented transverse to the plane of the installation opening.

13. Installation box (1, 1') according to claims 11 and 12, wherein the break-off member (28) is positioned with respect to the spout (9) for in connected condition of the connection means (13a,b, 16a-c, 22a,b, 20a-c) being situated near the bottom wall (5) of the installation box and/or to protrude therefrom.

14. Installation box (1, 1') according to any one of the preceding claims, wherein the first connection means (13a,b, 16a-c) are also adapted for entering a connection with the first connection means (13a,b, 16a-c) of a comparable installation box.

15. Installation box (1, 1') according to claim 14, when dependent on claim 6, wherein the first locking means in the insert direction are situated on either side of the passage opening of the first and second installation box, respectively.

16. Installation box (1, 1'), according to any one of the preceding claims, wherein between the second connection means (22a,b) the insert piece (3, 3') comprises a cover wall (31) oriented substantially transverse to the spout (9), of which cover wall (31) an inside in connected condition of the spout is at least partially recessed from a boundary of the passage opening (10) for defining a front space (40) between the spout (9) and the box wall (4), wherein at the inside the spout (9) preferably changes according to a curved surface (29), preferably a convexly curved surface (29), into the plate section (31), wherein towards the wall (4) the spout (9) preferably has a cross-section that broadens itself.

17. Installation box according to claim 16, wherein the second connection means (22a,b) and the cover wall (31) define a substantially rectangular covering (30, 31) for the passage opening (10), wherein the centre line of the spout (9) is situated out of the centre of the covering (30, 31).

18. Assembly (1, 1') of a first and a second installation box (1, 2) according to any one of the preceding claims, both comprising a wall (4) having a passage opening (10) that may or may not be closed, wherein the wall (4) of the first installation box (1) comprises first connection means (13a,b, 17), and the wall (4) of the second installation box (2) comprises second connection means (13a,b, 16a,c) cooperating with the first, for connecting the boxes (1, 2) by a mutual displacement in an insert direction (A) of the first and second connection means, wherein the first and/or second connection means (13a,b, 17, 16a,c) comprise first and second locking means (17, 16a-c), respectively, for securing the mutual position of the first and second installation box (1, 2), wherein the first and/or second locking means (17, 16a,c) in the insert direction are situated on either side of the passage opening (10) of the first and second installation box (1, 2), respectively, wherein the first and second connection means (13a,b, 17, 16a,c) preferably are adapted for securing the first and second installation box (1, 2) against mutual movement in the insert direction and in a direction (A) opposite thereto.

19. Assembly according to claim 18, wherein the first and second installation box (1, 2) both comprise a circumferential wall (4) of which an edge (6) bounds an installation opening, wherein the insert direction (A) is oriented transverse to the plane of the installation openings, wherein the first and second locking means (17, 16a,c) preferably are adjusted to locking the boxes (1, 2) in a mutual position in which the installation openings are situated substantially in the same plane.

20. Assembly according to claim 18 or 19, wherein the first locking means (17) comprise a slot (17) bounded in its longitudinal direction and extending in insert direction (A), and the second locking means (16a,c) comprise two protrusions (16a,c) that can be placed when inserting into the slot (17), wherein the centre-to-centre distance between the protrusions (16a,c) is smaller than the distance between the boundaries (18a,c) of the slot (17).

21. Assembly according to any one of the claims 18-20, wherein the first and second connection means (13a,b, 17, 16a,c) comprise a first and second rail (13a,b), respectively, extending in insert direction (A), wherein the first and second rail (13a,b) are adjusted for interengagement, wherein the first and/or second rail (13a,b) at an insert side preferably keep an insert opening (40a,b) free that is oriented transverse to the insert direction (A) for transverse to the insert direction (A) bringing the first and second rail (13a,b) in a mutual positioning position, wherein the insert opening (40a,b) in the insert direction (A) preferably is spaced apart from a leading part (16c, 18b) of the first and/or second locking means (17, 16a,c).

22. Assembly according to any one of the claims 18-21, wherein the first and/or second locking means (17, 16a,c) are situated next to the first and second rail (13a,b), respectively.

23. Assembly according to any one of the claims 18-22, wherein the first and/or second connection means (13a,b, 17, 16a,b) are also adapted for connecting an insert piece (3, 3') having a spout (9) at the first or second installation box (1, 2), respectively.

## Patentansprüche

1. Installationsdose (1, 1'), umfassend eine Wand (4), welche eine Durchgangsöffnung (10), welche geschlossen oder nicht geschlossen sein kann, und ein Einführstück (3, 3') umfasst, welches ein Auslassrohr (9) umfasst, welches vor der Durchgangsöffnung anzuordnen ist, wobei die Wand (4) erste Verbindungsmittel (13a,b, 16a-c) umfasst und das Einführstück (3, 3') zweite Verbindungsmittel (22a,b, 20a-c) umfasst, welche mit den ersten zusammenwirken, um das Einführstück mit der Wand durch Bewegen des Einführstücks in eine Einführrichtung (A) bezüglich der Wand (4) zu verbinden, **dadurch gekennzeichnet, dass** die ersten und zweiten Verbindungsmittel (13a,b, 16a-c, 22a,b, 20a-c) dazu eingerichtet sind, innerhalb des Zusammenwirkens der ersten und zweiten Verbindungsmittel das Einführstück (3, 3') in der Einführrichtung (A) in wenigstens zwei definierten Positionen bezüglich der Wand (4) zu halten, wobei die definierten Positionen aufeinander folgend und in der Einführrichtung (A) voneinander versetzt sind, und wobei das Einführstück (3, 3') von einer definierten Position zu einer nächsten definierten Position innerhalb des Zusammenwirkens der ersten und zweiten Verbindungsmittel bewegbar ist, indem eine Schwellenkraft überwunden wird.

2. Installationsdose (1, 1') nach Anspruch 1, wobei die ersten und zweiten Verbindungsmittel (13a,b, 16a-c, 22a,b, 20a-c) dazu eingerichtet sind, das Einführstück (3, 3') innerhalb des Zusammenwirkens in wenigstens drei definierten Positionen bezüglich der Wand (4) zu halten.

3. Installationsdose (1, 1') nach Anspruch 1 oder 2, wobei die ersten und zweiten Verbindungsmittel (13a,b, 16a-c, 22a,b, 20a-c) dazu eingerichtet sind, das Einführstück (3, 3') gegen ein Verlagern in der Einführrichtung und in der dazu gegengerichteten Richtung zu sichern.

4. Installationsdose (1, 1') nach einem der vorhergehenden Ansprüche, wobei die ersten und zweiten Verbindungsmittel (13a,b, 16a-c, 22a,b, 20a-c) dazu eingerichtet sind, das Einführstück in den definierten Positionen in der gleichen räumlichen Orientierung bezüglich der Wand (4) zu halten.

5. Installationsdose (1, 1') nach einem der vorhergehenden Ansprüche, wobei die Schwellen kraft von einer Schnappverbindung (16a-c, 20a-c) bereitgestellt ist.

6. Installationsdose (1, 1') nach einem der vorhergehenden Ansprüche, wobei die ersten Verbindungsmittel (13a,b, 16a-c) erste Führungsmittel (13a,b) und erste Verriegelungsmittel (16a-c) umfassen, und die zweiten Verbindungsmittel (22a,b, 20a-c) zweite Führungsmittel (22a,b) und zweite Verriegelungsmittel (20a-c) zum Zusammenwirken mit den ersten Führungsmitteln beziehungsweise den ersten Verriegelungsmitteln umfassen, wobei die ersten und zweiten Verriegelungsmittel (16a-c, 20a-c) vorzugsweise benachbart zu den ersten beziehungsweise zweiten Führungsmitteln (13a,b, 22a,b) angeordnet sind.

7. Installationsdose (1, 1') nach Anspruch 6, wobei die ersten und zweiten Führungsmittel (13a,b, 22a,b) eine erste beziehungsweise zweite Schiene (13a,b, 22a,b) umfassen, welche sich in der Einführrichtung (A) erstrecken, wobei die erste und zweite Schiene (13a,b, 22a,b) für ein gegenseitiges Eingreifen angepasst sind, wobei die erste oder/und zweite Schiene vorzugsweise an einer Einführseite eine Einführöffnung (40a,b) frei hält, welche transversal zu der Einführrichtung (A) orientiert ist, um transversal zu der Einführrichtung (A) die erste und zweite Schiene in eine gegenseitige Positionierungsposition zu bringen, wobei die Einführöffnung (40a,b) in der Einführrichtung (A) vorzugsweise von einem führenden Teil der ersten oder/und zweiten Verriegelungsmittel (16a-c, 20a-c) beabstandet ist.

8. Installationsdose (1, 1') nach Anspruch 6 oder 7, wobei die ersten und zweiten Verriegelungsmittel (16a-c, 20a-c) dazu eingerichtet sind, gegenseitig in einer Richtung transversal zu der Einführrichtung (A) einzugreifen, wobei die ersten und zweiten Verriegelungsmittel (16a-c, 20a-c) vorzugsweise dazu eingerichtet sind, gegenseitig mit im Wesentlichen entgegengesetzten Verriegelungsflächen der ersten und zweiten Verriegelungsmittel (16a-c, 20a-c) einzugreifen, welche Verriegelungsflächen wenigstens teilweise in der Einführrichtung (A) voneinander beabstandet sind.

9. Installationsdose (1, 1') nach einem der Ansprüche 6-8, wobei die ersten und zweiten Verriegelungsmittel (16a-c, 20a-c) dazu eingerichtet sind, gegenseitig konkav-konvex einzugreifen, oder/und wobei die ersten und zweiten Verriegelungsmittel dazu eingerichtet sind, gegenseitig mittels Zapfen und Zapfenloch einzugreifen, oder/und wobei die ersten und zweiten Verriegelungsmittel dazu eingerichtet sind, gegenseitig männlich-weiblich einzugreifen.

10. Installationsdose (1, 1') nach einem der Ansprüche 6-9, umfassend elastisch verformbare Bereiche an den ersten oder/und zweiten Verriegelungsmitteln (16a-c, 20a-c) für eine elastische Deformation während eines Eintretens in das Zusammenwirken der ersten und zweiten Verriegelungsmittel (16a-c, 20a-c) und des darauf folgenden Aufrechterhalten des Zusammenwirkens.

11. Installationsdose (1, 1') nach einem der Ansprüche 6-10, wobei die ersten Verriegelungsmittel (16a-c) in Einführrichtung derart ausgelegt sind, dass sie mehrere sind, während die ersten Verriegelungsmittel (16a-c) in Einführrichtung (A) an beiden Seiten der Durchgangsöffnung angeordnet sind, oder/und wobei die zweiten Verriegelungsmittel in Einführrichtung (A) an beiden Seiten des Auslassrohrs (9) angeordnet sind, oder/und wobei ein Teil der zweiten Verriegelungsmittel (20) an einem Abbruchelement (28) des Einführstücks angeordnet ist, welches Element vorzugsweise transversal zu der Einführrichtung angeordnet ist, wobei der Teil der zweiten Verriegelungsmittel (20c) durch Abbrechen des Abbruchelements (28) entfernbar ist.

12. Installationsdose (1, 1') nach einem der vorhergehenden Ansprüche, umfassend eine Bodenwand (5) und eine Umfangswand (4), von welcher ein Rand (6) die Installationsöffnung begrenzt, wobei die Einführrichtung (A) transversal zu der Ebene der Installationsöffnung orientiert ist.

13. Installationsdose (1, 1') nach den Ansprüchen 11 und 12, wobei das Abbruchelement (28) bezüglich des Auslassrohrs (9) derart positioniert ist, dass es in verbundenem Zustand der Verbindungsmittel (13a,b, 16a-c, 22a,b, 20a-c) nahe der Bodenwand (5) der Installationsdose angeordnet ist oder/und davon vorsteht.

14. Installationsdose (1, 1') nach einem der vorhergehenden Ansprüche, wobei die ersten Verbindungsmittel (13a,b, 16a-c) ebenfalls dazu eingerichtet sind, eine Verbindung mit den ersten Verbindungsmitteln (13a,b, 16a-c) einer vergleichbaren Installationsdose einzugehen.

15. Installationsdose (1, 1') nach Anspruch 14, wenn dieser von Anspruch 6 abhängt, wobei die ersten Verriegelungsmittel in der Einführrichtung an jeder Seite der Durchgangsöffnung jeweils der ersten und zweiten Installationsdose angeordnet sind.

16. Installationsdose (1, 1') nach einem der vorhergehenden Ansprüche, wobei zwischen den zweiten Verbindungsmitteln (22a,b) das Einführstück (3, 3') eine Abdeckungswand (31) umfasst, welche im Wesentlichen transversal zu dem Auslassrohr (9) orientiert ist, von welcher Abdeckungswand (31) eine Innenseite in verbundenem Zustand des Auslassrohrs wenigstens teilweise von einer Begrenzung der Durchgangsöffnung (10) vertieft ist, um einen vorderen Raum (40) zwischen dem Auslassrohr (9) und der Kistenwand (4) zu definieren, wobei an der Innenseite das Auslassrohr (9) vorzugsweise gemäß einer gekrümmten Fläche (29), vorzugsweise einer konvex gekrümmten Fläche (29), in den Plattenabschnitt (31) übergeht, wobei in Richtung der Wand (4) das Auslassrohr (9) vorzugsweise einen Querschnitt aufweist, welcher sich verbreitert.

17. Installationsdose nach Anspruch 16, wobei die zweiten Verbindungsmittel (22a,b) und die Abdeckungswand (31) eine im Wesentlichen rechteckige Abdeckung (30, 31) für die Durchgangsöffnung (10) definieren, wobei die Mittellinie des Auslassrohrs (9) außerhalb der Mitte der Abdeckung (30, 31) angeordnet ist.

18. Anordnung (1, 1') einer ersten und einer zweiten Installationsdose (1, 2) nach einem der vorhergehenden Ansprüche, beide umfassend eine Wand (4), welche eine Durchgangsöffnung (10) aufweist, welche geschlossen oder nicht geschlossen sein kann, wobei die Wand (4) der ersten Installationsdose (1) erste Verbindungsmittel (13a,b, 17) umfasst, und die Wand (4) der zweiten Installationsdose (2) zweite Verbindungsmittel (13a,b, 16a,c) umfasst, welche mit den ersten zum Verbinden der Dosen (1, 2) durch eine gegenseitige Verlagerung der ersten und zweiten Verbindungsmittel in einer Einführrichtung (A) zusammenwirken, wobei die ersten oder/und zweiten Verbindungsmittel (13a,b, 17, 16a,c) erste beziehungsweise zweite Verriegelungsmittel (17, 16a-c) umfassen, um die gegenseitige Position der ersten und zweiten Installationsdose (1, 2) zu sichern, wobei die ersten oder/und zweiten Verriegelungsmittel (17, 16a,c) in der Einführrichtung an jeder Seite der Durchgangsöffnung (10) jeweils der ersten und zweiten Installationsdose (1, 2) angeordnet sind, wobei die ersten und zweiten Verbindungsmittel (13a,b, 17, 16a,c) vorzugsweise dazu eingerichtet sind, die erste und zweite Installationsdose (1, 2) gegen eine gegenseitige Bewegung in der Einführrichtung und in einer Richtung (A) gegengerichtet dazu zu sichern.

19. Anordnung nach Anspruch 18, wobei die erste und zweite Installationsdose (1, 2) beide eine Umfangswand (4) umfassen, von welcher ein Rand (6) eine Installationsöffnung begrenzt, wobei die Einführrichtung (A) transversal zu der Ebene der Installationsöffnungen orientiert ist, wobei die ersten und zweiten Verriegelungsmittel (17, 16a, c) vorzugsweise dazu angepasst sind, die Dosen (1, 2) in einer gegenseitigen Position zu verriegeln, in welcher die Installationsöffnungen im Wesentlichen in der selben Ebene angeordnet sind.

20. Anordnung nach Anspruch 18 oder 19, wobei die ersten Verriegelungsmittel (17) einen Schlitz (17) umfassen, welcher in seiner longitudinalen Richtung begrenzt ist und sich in Einführrichtung (A) erstreckt, und die zweiten Verriegelungsmittel (16a,c) zwei Vorsprünge (16a,c) umfassen, welche platziert werden können, wenn sie in den Schlitz (17) eingeführt werden, wobei der Mitte-zu-Mitte-Abstand zwischen den Vorsprüngen (16a,c) kleiner als der Abstand zwischen den Begrenzungen (18a,c) des Schlitzes (17) ist.

21. Anordnung nach einem der Ansprüche 18-20, wobei die ersten und zweiten Verbindungsmittel (13a,b, 17, 16a,c) eine erste beziehungsweise zweite Schiene (13a,b) umfassen, welche sich in Einführrichtung (A) erstrecken, wobei die erste und zweite Schiene (13a,b) dazu angepasst sind, gegenseitig einzugreifen, wobei die erste oder/und zweite Schiene (13a,b) an einer Einführseite vorzugsweise eine Einführöffnung (40a,b) freihalten, welche transversal zu der Einführrichtung (A) orientiert ist, um transversal zu der Einführrichtung (A) die erste und zweite Schiene (13a,b) in eine gegenseitige Positionierungsposition zu bringen, wobei die Einführöffnung (40a,b) in der Einführrichtung (A) vorzugsweise von einem führenden Teil (16c, 18b) der ersten oder/und zweiten Verriegelungsmittel (17, 16a,c) beabstandet ist.

22. Anordnung nach einem der Ansprüche 18-21, wobei die ersten oder/und zweiten Verriegelungsmittel (17, 16a,c) benachbart zu der ersten beziehungsweise zweiten Schiene (13a,b) angeordnet sind.

23. Anordnung nach einem der Ansprüche 18-22, wobei die ersten oder/und zweiten Verbindungsmittel (13a,b, 17, 16a,b) ebenfalls dazu eingerichtet sind, ein Einführstück (3, 3') zu verbinden, welches ein Auslassrohr (9) an der ersten beziehungsweise zweiten Installationsdose (1, 2) aufweist.

## Revendications

1. Boîte d'installation (1, 1') comprenant une paroi (4) ayant une ouverture de passage (10) qui peut ou peut ne pas être fermée, et une pièce d'insertion (3, 3') ayant un bec verseur (9) destiné à être placé en face de l'ouverture de passage, dans laquelle la paroi (4) comprend des premiers moyens de raccordement (13a,b, 16a-c) et la pièce d'insertion (3, 3') comprend des seconds moyens de raccordement (22a,b, 20a-c) coopérant avec les premiers, pour raccorder la pièce d'insertion à la paroi en déplaçant la pièce d'insertion dans une direction d'insertion (A) par rapport à la paroi (4), **caractérisée en ce que** les premiers et seconds moyens de raccordement (13a,b, 16a-c, 22a,b, 20a-c) sont adaptés, dans les limites de la coopération des premiers et seconds moyens de raccordement, pour retenir la pièce d'insertion (3, 3') dans la direction d'insertion (A) dans au moins deux positions définies par rapport à la paroi (4), dans laquelle les positions définies sont consécutives et décalées l'une de l'autre, dans la direction d'insertion (A) et dans laquelle la pièce d'insertion (3, 3') est mobile d'une position définie à une position définie suivante, dans les limites de la coopération des premiers et seconds moyens de raccordement, en venant à bout d'une force de seuil.

2. Boîte d'installation (1, 1') selon la revendication 1, **caractérisée en ce que** les premiers et seconds moyens de raccordement (13a,b, 16a-c, 22a,b, 20a-c) sont adaptés, dans les limites de la coopération, pour retenir la pièce d'insertion (3, 3') dans au moins trois positions définies par rapport à la paroi (4).

3. Boîte d'installation (1, 1') selon la revendication 1 ou 2, **caractérisée en ce que** les premiers et seconds moyens de raccordement (13a,b, 16a-c, 22a,b, 20a-c) sont adaptés pour fixer la pièce d'insertion (3, 3') contre le déplacement dans la direction d'insertion et dans la direction opposée à cette dernière.

4. Boîte d'installation (1, 1') selon l'une quelconque des revendications précédentes, **caractérisée en ce que** les premiers et seconds moyens de raccordement (13a,b, 16a-c, 22a,b, 20a-c) sont adaptés pour retenir la pièce d'insertion dans les positions définies dans la même orientation spatiale par rapport à la paroi (4).

5. Boîte d'installation (1, 1') selon l'une quelconque des revendications précédentes, **caractérisée en ce que** la force de seuil est fournie par un raccordement par encliquetage (16a-c, 20a-c).

6. Boîte d'installation (1, 1') selon l'une quelconque des revendications précédentes, **caractérisée en ce que** les premiers moyens de raccordement (13a,b, 16a-c) comprennent des premiers moyens de guidage (13a,b) et des premiers moyens de verrouillage (16a-c) et les seconds moyens de raccordement (22a,b, 20a-c) comprennent des seconds moyens de guidage (22a,b) et des seconds moyens de verrouillage (20a-c) pour la coopération avec les premiers moyens de guidage et les premiers moyens de verrouillage respectivement, dans laquelle les premiers et seconds moyens de verrouillage (16a-c, 20a-c) sont de préférence situés de manière adjacente aux premiers et seconds moyens de guidage (13a,b, 22a,b), respectivement.

7. Boîte d'installation (1, 1') selon la revendication 6, **caractérisée en ce que** les premiers et seconds moyens de guidage (13a,b, 22a,b) comprennent un premier et un second rail (13a,b, 22a,b) respectivement, s'étendant dans la direction d'insertion (A), dans laquelle les premier et second rails (13a,b, 22a,b) sont ajustés pour la mise en prise mutuelle, dans laquelle le premier et/ou le second rail, de préférence au niveau d'un côté d'insertion, maintiennent une ouverture d'insertion (40a,b) libre qui est orientée transversalement par rapport à la direction d'insertion (A), pour être transversale par rapport à la direction d'insertion (A), amenant les premier et second rails dans une position de positionnement mutuelle, dans laquelle l'ouverture d'insertion (40a,b) dans la direction d'insertion (A) est de préférence espacée d'une partie d'attaque des premiers et/ou seconds moyens de verrouillage (16a-c, 20a-c).

8. Boîte d'installation (1, 1') selon la revendication 6 ou 7, **caractérisée en ce que** les premiers et seconds moyens de verrouillage (16a-c, 20a-c) sont adaptés pour la mise en prise mutuelle dans une direction transversale par rapport à la direction d'insertion (A), dans laquelle les premiers et seconds moyens de verrouillage (16a-c, 20a-c) sont de préférence adaptés pour la mise en prise mutuelle avec des surfaces de verrouillage sensiblement opposées des premiers et seconds moyens de verrouillage (16a-c, 20a-c), lesquelles surfaces de verrouillage sont au moins partiellement espacées dans la direction d'insertion (A).

9. Boîte d'installation (1, 1') selon l'une quelconque des revendications 6 à 8, **caractérisée en ce que** les premiers et seconds moyens de verrouillage (16a-c, 20a-c) sont adaptés pour une mise en prise concave - convexe mutuelle et/ou dans laquelle les premiers et seconds moyens de verrouillage sont adaptés pour une mise en prise mutuelle à tenon et mortaise, et/ou dans laquelle les premiers et seconds moyens de verrouillage sont adaptés pour une mise en prise mutuelle mâle - femelle.

10. Boîte d'installation (1, 1') selon l'une quelconque des revendications 6 à 9, comprenant des zones élastiquement déformables au niveau des premiers et/ou seconds moyens de verrouillage (16a-c, 20a-c) pour la déformation élastique pendant l'entrée dans la coopération des premiers et seconds moyens de verrouillage (16a-c, 20a-c) et la conservation ultérieure de la coopération.

11. Boîte d'installation (1, 1') selon l'une quelconque des revendications 6 à 10, **caractérisée en ce que** les premiers moyens de verrouillage (16a-c) dans la direction d'insertion sont conçus afin d'être multiples, **caractérisée en ce que** les premiers moyens de verrouillage (16a-c) dans la direction d'insertion (A) sont situés des deux côtés de l'ouverture de passage, et/ou dans laquelle les seconds moyens de verrouillage dans la direction d'insertion (A) sont situés des deux côtés du bec verseur (9), et/ou dans laquelle une partie des seconds moyens de verrouillage (20) est située au niveau d'un élément de rupture (28) de la pièce d'insertion, lequel élément est de préférence situé transversalement par rapport à la direction d'insertion, dans laquelle la partie des seconds moyens de verrouillage (20c) est amovible en rompant l'élément de rupture (28).

12. Boîte d'installation (1, 1') selon l'une quelconque des revendications précédentes, comprenant une paroi inférieure (5) et une paroi circonférentielle (4) dont un bord (6) délimite l'ouverture d'installation, **caractérisée en ce que** la direction d'insertion (A) est orientée de manière transversale par rapport au plan de l'ouverture d'installation.

13. Boîte d'installation (1, 1') selon les revendications 11 et 12, dans laquelle l'élément de rupture (28) est positionné par rapport au bec verseur (9) pour être dans la condition raccordée des moyens de raccordement (13a,b, 16a-c, 22a,b, 20a-c) qui sont situés à proximité de la paroi inférieure (5) de la boîte d'installation et/ou en font saillie.

14. Boîte d'installation (1, 1') selon l'une quelconque des revendications précédentes, **caractérisée en ce que** les premiers moyens de raccordement (13a,b, 16a-c) sont également adaptés pour pénétrer dans un raccordement avec les premiers moyens de raccordement (13a,b, 16a-c) d'une boîte d'installation comparable.

15. Boîte d'installation (1, 1') selon la revendication 14, lorsqu'elle dépend de la revendication 6, **caractérisée en ce que** les premiers moyens de verrouillage dans la direction d'insertion sont situés de chaque côté de l'ouverture de passage de la première et de la seconde boîte d'installation, respectivement.

16. Boîte d'installation (1, 1') selon l'une quelconque des revendications précédentes, **caractérisée en ce que**, entre les seconds moyens de raccordement (22a,b), la pièce d'insertion (3, 3') comprend une paroi de couvercle (31) orientée sensiblement transversalement par rapport au bec verseur (9), de laquelle paroi de couvercle (31), un intérieur dans la condition raccordée du bec verseur est au moins partiellement enfoncé à partir d'une limite de l'ouverture de passage (10) pour définir un espace avant (40) entre le bec verseur (9) et la paroi de boîte (4), dans laquelle, à l'intérieur, le bec verseur (9) change de préférence selon une surface incurvée (29), de préférence une surface incurvée de manière convexe (29), dans la section de plaque (31), dans laquelle vers la paroi (4), le bec verseur (9) a de préférence une section transversale qui s'élargit elle-même.

17. Boîte d'installation selon la revendication 16, **caractérisée en ce que** les seconds moyens de raccordement (22a,b) et la paroi de couvercle (31) définissent un recouvrement sensiblement rectangulaire (30, 31) pour l'ouverture de passage (10), dans laquelle la ligne centrale du bec verseur (9) est située hors du centre du recouvrement (30, 31).

18. Ensemble (1, 1') d'une première et d'une seconde boîte d'installation (1, 2) selon l'une quelconque des revendications précédentes, comprenant toutes deux une paroi (4) ayant une ouverture de passage (10) qui peut ou peut ne pas être fermée, **caractérisé en ce que** la paroi (4) de la première boîte d'installation (1) comprend des premiers moyens de raccordement (13a,b, 17), et la paroi (4) de la seconde boîte d'installation (2) comprend des seconds moyens de raccordement (13a,b, 16a,c) coopérant avec les premiers, pour raccorder les boîtes (1, 2) par un déplacement mutuel dans une direction d'insertion (A) des premiers et seconds moyens de raccordement, dans laquelle les premiers et/ou seconds moyens de raccordement (13a,b, 17, 16a,c) comprennent des premiers et seconds moyens de verrouillage (17, 16a-c), respectivement, pour fixer la position mutuelle des première et seconde boîtes d'installation (1, 2), dans laquelle les premiers et/ou seconds moyens de verrouillage (17, 16a,c) dans la direction d'insertion sont situés de chaque côté de l'ouverture de passage (10) des première et seconde boîtes d'installation (1, 2) respectivement, dans laquelle les premiers et seconds moyens de raccordement (13a,b, 17, 16a,c) sont de préférence adaptés pour fixer les première et seconde boîtes d'installation (1, 2) contre le mouvement mutuel dans la direction d'insertion et dans une direction (A) opposée à cette dernière.

19. Ensemble selon la revendication 18, **caractérisé en ce que** les première et seconde boîtes d'installation (1, 2) comprennent toutes deux une paroi circonférentielle (4) dont un bord (6) délimite une ouverture d'installation, dans laquelle la direction d'insertion (A) est orientée transversalement par rapport au plan des ouvertures d'installation, dans laquelle les premiers et seconds moyens de verrouillage (17, 16a,c) sont de préférence ajustés pour verrouiller les boîtes (1, 2) dans une position mutuelle dans laquelle les ouvertures d'installation sont situées sensiblement dans le même plan.

20. Ensemble selon la revendication 18 ou 19, **caractérisé en ce que** les premiers moyens de verrouillage (17) comprennent une fente (17) délimitée dans leur direction longitudinale et s'étendant dans une direction d'insertion (A) et les seconds moyens de verrouillage (16a,c) comprennent deux saillies (16a,c) qui peuvent être placées lors de l'insertion dans la fente (17), dans laquelle la distance de centre à centre entre les saillies (16a,c) est inférieure à la distance entre les limites (18a, c) de la fente (17).

21. Ensemble selon l'une quelconque des revendications 18 à 20, **caractérisé en ce que** les premiers et seconds moyens de raccordement (13a,b, 17, 16a,c) comprennent un premier et un second rail (13a,b) respectivement, s'étendant dans la direction d'insertion (A), dans laquelle les premier et second rails (13a,b) sont ajustés pour la mise en prise mutuelle, dans laquelle le premier et/ou le second rail (13a,b) au niveau d'un côté d'insertion, maintiennent de préférence une ouverture d'insertion (40a,b) libre qui est orientée transversalement par rapport à la direction d'insertion (A) pour être transversale par rapport à la direction d'insertion (A), amenant les premier et second rails (13a,b) dans une position de positionnement mutuelle, dans laquelle l'ouverture d'insertion (40a,b) dans la direction d'insertion (A) est de préférence espacée d'une partie d'attaque (16c, 18b) des premiers et/ou seconds moyens de verrouillage (17, 16a,c).

22. Ensemble selon l'une quelconque des revendications 18 à 21, **caractérisé en ce que** les premiers et/ou seconds moyens de verrouillage (17, 16a,c) sont situés à côté des premier et second rails (13a,b), respectivement.

23. Ensemble selon l'une quelconque des revendications 18 à 22, **caractérisé en ce que** les premiers et/ou seconds moyens de raccordement (13a,b, 17, 16a,b) sont également adaptés pour raccorder une pièce d'insertion (3, 3') ayant un bec verseur (9) au niveau de la première ou seconde boîte d'installation (1, 2), respectivement.
